(19) Europäisches Patentamt
European Patent Office
Office européen des brevets

(11) **EP 3 190 598 B1**

(12) **EUROPEAN PATENT SPECIFICATION**

(45) Date of publication and mention
of the grant of the patent:
**16.12.2020 Bulletin 2020/51**

(21) Application number: **15838924.7**

(22) Date of filing: **29.07.2015**

(51) Int Cl.:
*H01G 4/30* (2006.01)    *H01C 7/10* (2006.01)
*H01F 17/00* (2006.01)    *H01G 4/12* (2006.01)
*H01G 4/232* (2006.01)

(86) International application number:
**PCT/JP2015/071468**

(87) International publication number:
**WO 2016/035482 (10.03.2016 Gazette 2016/10)**

(54) **CERAMIC ELECTRONIC COMPONENT AND METHOD FOR PRODUCING SAME**

ELEKTRONISCHE KERAMIKKOMPONENTE UND VERFAHREN ZUR HERSTELLUNG DAVON

COMPOSANT ÉLECTRONIQUE EN CÉRAMIQUE ET SON PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.09.2014 JP 2014179507**

(43) Date of publication of application:
**12.07.2017 Bulletin 2017/28**

(73) Proprietor: **Murata Manufacturing Co., Ltd.
Nagaokakyo-shi, Kyoto 617-8555 (JP)**

(72) Inventors:
• **SAWADA, Eriko
Nagaokakyo-shi
Kyoto 617-8555 (JP)**

• **ITO, Hiromasa
Nagaokakyo-shi
Kyoto 617-8555 (JP)**
• **SASAKI, Tsutomu
Nagaokakyo-shi
Kyoto 617-8555 (JP)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(56) References cited:
**JP-A- H09 283 365        JP-A- H09 283 365
JP-A- S63 122 295        JP-A- 2011 129 884
US-A1- 2014 233 149**

**Description**

TECHNICAL FIELD

The present invention relates to a ceramic electronic component and a manufacturing method therefor, and more particularly, to a ceramic electronic component that has internal electrodes disposed in a ceramic body, such as a thermistor, a laminated ceramic capacitor, a laminated LC composite component of an inductor in combination with a capacitor, and a laminated varistor, and a manufacturing method therefor.

BACKGROUND ART

As ceramic electronic components such as thermistors including positive characteristic (or positive temperature coefficient, PTC) thermistors and negative characteristic (or negative temperature coefficient, NTC) thermistors, and laminated ceramic capacitors, ceramic electronic components are widely known, which each include a ceramic body, internal electrodes disposed within the ceramic body, and external electrodes disposed on both ends of the ceramic body, and electrically connected to the internal electrodes. In the manufacture of such ceramic electronic components, a method of applying, to a ceramic body, a conductive paste (external electrode paste) containing conductive particles and a glass material, and applying a baking treatment to the paste, thereby forming external electrodes is typically known as a method for forming external electrodes on both ends of a ceramic body.

For example, Patent Document 1 discloses a ceramic electronic component provided with external electrodes that provide electrical conduction to internal electrodes by applying and baking a conductive paste including glass frit to an element provided with the internal electrodes in a ceramic, which is characterized in that the thickness of a glass frit layer formed between the external electrode and the element falls within the range of 0.8 to 2.2 $\mu$m. Patent Document 1 discloses, as a method for manufacturing the ceramic electronic component described above, a method characterized in that a conductive paste containing, as a conductive constituent, at least one selected from the group consisting of Cu, Ag, Pd, and an Ag-Pd alloy, and containing glass frit selected from the group consisting of zinc borosilicate-based glass frit, lead borosilicate-based glass frit, and barium borosilicate-based glass frit in a proportion of 1 to 30 parts by weight with respect to 100 parts by weight of the conductive constituent is applied to the element, and baked at a temperature of 500 to 1000°C to form external electrodes, thereby forming glass frit layers in the range of 0.8 to 2.2 $\mu$m in thickness between the external electrodes and the element.

PRIOR ART DOCUMENT

PATENT DOCUMENT

Patent Document 1: Japanese Patent Application Laid-Open No. H09-7879
Patent Document 2: JP H09 283365 A

SUMMARY OF THE INVENTION

Problem to be solved by the invention

In the case of forming external electrodes by applying an external electrode paste to a ceramic body and applying a baking treatment as described above, glass components may be deposited on the surfaces of external electrodes obtained. When the glass components are deposited on the surfaces of the external electrodes, plated layers may be formed defectively in the formation of plated layers on the surfaces of the external electrodes. In addition, the increased deposition amounts of the glass components on the surfaces of the external electrodes reduce the glass components present between the ceramic body and the external electrodes for providing fixing strength between the ceramic body and the external electrodes. As a result, the reduced glass components lead to a decrease in mechanical strength of the ceramic electronic component, and moreover, may also adversely affect reliability such as moisture resistance.

A method of using a glass material that has a high softening point or a glass material that has a high viscosity at a baking temperature, and a method of changing a baking condition, such as lowering the baking temperature and shortening the baking time have been conventionally adopted as a method for suppressing deposition of the glass components on the external electrode surfaces. However, one of objects of adding the glass material to the external electrode paste is the acceleration of sintering for conductive particles through liquid-phase sintering with the use of softened glass during the baking treatment. Therefore, when a conventional method is used as described above, the softened glass component can be supplied insufficiently to the surfaces of the conductive particles during the baking treatment, thereby interfering with sintering for conductive particles. As a result, while deposition of the glass components onto the external electrode surfaces is suppressed, insufficient sintering decreases mechanical strength and reliability, and moreover, there are concerns about the generation of various defects, such as increased risks of solder bursts due to the increased volume of pores in the external electrodes.

Patent Document 1 discloses that the formation of the glass frit layers in the range of 0.8 to 2.2 $\mu$m in thickness between the external electrodes and the element suppresses deposition of excess glass frit on the external electrode surfaces, thereby improving the plating property.

However, in the ceramic electronic component disclosed in Patent Document 1, the glass frit layers are formed entirely at the interfaces between the external electrodes and the element, and there is thus a possibility that the glass frit layers will be exposed at the external electrode surfaces, in particular, at chip corners where the external electrodes are more likely to be made thin. Therefore, there is a possibility that plated layers will be more likely to be formed defectively. Furthermore, there has been a demand for further effectively suppressing deposition of the glass components on the external electrode surfaces. Another example is shown in Patent Document 2.

An object of the present invention is to provide a ceramic electronic component which suppresses deposition of glass components on external electrode surfaces, and keeps plated layers from being formed defectively.

Means for solving the problem

The inventors have found that the formation of glass accumulations that can accumulate glass components at the interfaces between external electrodes and a ceramic body can suppress deposition of the glass components on the external electrode surfaces, and as a result keep plated layers from being formed defectively, thereby achieving the present invention.

According to a first aspect of the present invention, there is provided a ceramic electronic component according to claim 1.

According to a second aspect of the present invention, there is provided a method for manufacturing a ceramic electronic component according to claim 16.

Advantageous effect of the invention

The ceramic electronic component according to the present invention, which is configured as described above, thus suppresses deposition of glass components on external electrode surfaces, and as a result, can keep plated layers from being formed defectively in the formation of plated layers on the surfaces of the external electrodes. In addition, the method for manufacturing a ceramic electronic component according to the present invention, which is configured as described above, can thus provide a ceramic electronic component which suppresses deposition of glass components on external electrode surfaces. As a result, plated layers can be kept from being formed defectively in the formation of plated layers on the surfaces of external electrodes of a ceramic electronic component manufactured by the method according to the present invention.

BRIEF EXPLANATION OF DRAWINGS

FIG. 1 is a schematic cross-sectional view illustrating the configuration of a ceramic electronic component according to an embodiment of the present invention.

FIG. 2 is a schematic cross-sectional view illustrating the configuration of a first modification example of a ceramic electronic component according to the embodiment of the present invention.

FIG. 3 is a schematic cross-sectional view illustrating the configuration of a second modification example of a ceramic electronic component according to the embodiment of the present invention.

FIG. 4 is a pattern diagram illustrating an example of the shape of a glass accumulation.

FIGS. 5(a), 5(b), and 5(c) are respectively graphs in which the lengths of columnar structures are plotted versus diffusion distances for a Cu element, a Pd element, and an Ag element.

FIGS. 6(a) to 6(c) are SEM images of columnar structures in ceramic electronic components according to examples 1, 10, and 11.

FIGS. 7(a) to 7(c) respectively show a SEM image of an external electrode surface of the ceramic electronic component according to the example 1, the result of Sn elemental mapping on the surface, and the result of 0 elemental mapping on the surface.

FIGS. 8(a) to 8(c) respectively show a SEM image of an external electrode surface of the ceramic electronic component according to an example 7, the result of Sn elemental mapping on the surface, and the result of O elemental mapping on the surface.

MODE FOR CARRYING OUT THE INVENTION

Embodiments of the present invention will be described below with reference to the drawings. However, the following embodiments are intended for exemplification, and the present invention is not to be considered limited to the following embodiments. Unless otherwise specified, the dimensions, materials, shapes, relative configurations, and the like of constituent elements as described below are not intended to limit the scope of the present invention thereto only, but simply by way of illustrative example. In addition, the sizes, shapes, positional relations, and the like of the constituent elements shown in the respective drawings may be exaggerated for making the explanation clear. It is to be noted that while NTC thermistors are explained as examples in the following embodiments, the present invention is not limited to NTC thermistors, but can be also applied similarly to other ceramic electronic components such as PTC thermistors, laminated ceramic capacitors, laminated LC composite components, and laminated varistors.

[Ceramic Electronic Component]

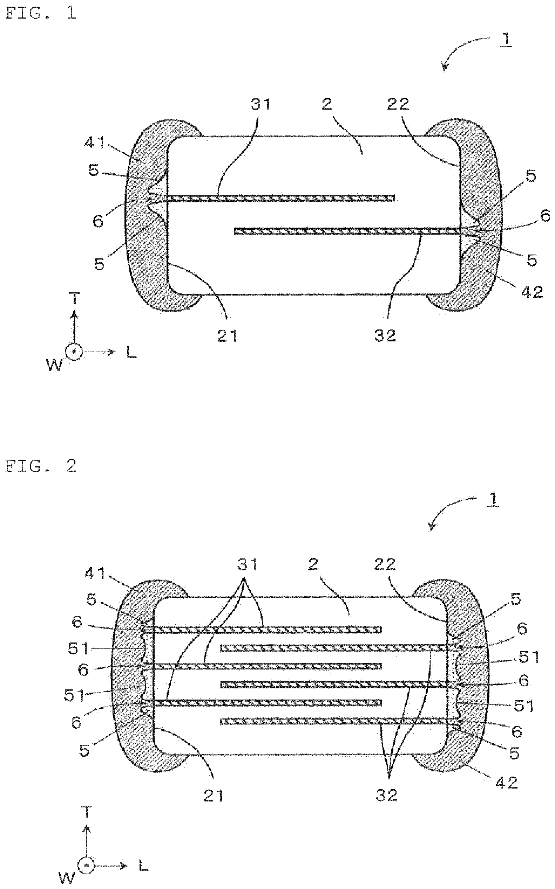

FIG. 1 is a schematic cross-sectional view illustrating the configuration of a ceramic electronic component 1 according to an embodiment of the present invention. The ceramic electronic component 1 shown in FIG. 1 includes a ceramic body 2, a first internal electrode 31 provided in the ceramic body 2 and exposed at one end surface 21 of the ceramic body 2, a second internal electrode 32 provided in the ceramic body 2 and exposed at the other end surface 22 of the ceramic body 2, a first external electrode 41 provided on the one end surface 21 of the ceramic body 2 and electrically connected to the first internal electrode 31, and a second external electrode 42 provided on the other end surface 22 of the ceramic body 2 and electrically connected to the second internal electrode 32. It is to be noted that as shown in FIG. 1, in the ceramic electronic component as described in this specification, a direction parallel to the direction from the one end surface 21 of the ceramic body 2 toward the other end surface 22 thereof is referred to as a "length direction" or an "L direction", a direction perpendicular to the length direction in the horizontal plane is referred to as a "width direction" or a "W direction", and a direction perpendicular to the length direction and the width direction is referred to as a "thickness direction" or a "T direction". In addition, a surface perpendicular to the L direction, a surface perpendicular to the W direction, and a surface perpendicular to the T direction may be referred to respectively as a WT surface, an LT surface, and an LW surface.

(Ceramic Body)

In the present embodiment, the composition of the ceramic body 2 is not particularly limited, but may be composed of, for example, a ceramic material including one or more elements selected from the group consisting of Mn, Ni, Fe, Co, and Al.

(Internal Electrode)

In the ceramic electronic component 1 according to the present embodiment, the internal electrodes are composed of the first internal electrode 31 and the second internal electrode 32. The first internal electrode 31 and the second internal electrode 32 are disposed to be opposed to each other within the ceramic body 2. The first internal electrode 31 has one end exposed at the one end surface 21 of the ceramic body 2. The second internal electrode 32 has one end exposed at the other end surface 22 of the ceramic body 2. As will be described later, the ceramic electronic component 1 according to the present embodiment may include a plurality of first internal electrodes 31 and a plurality of second internal electrodes 32. The first internal electrode 31 and the second internal electrode 32 include a metal component. The metal component included in the internal electrodes is not particularly limited, but may contain, for example, at least one selected from noble metals: Ag; Pd; and Ag-Pd alloys.

(External Electrode)

In the ceramic electronic component 1 according to the present embodiment, the external electrodes are composed of the first external electrode 41 and the second external electrode 42. The first external electrode 41 is provided on the one end surface 21 of the ceramic body 2, and electrically connected to the first internal electrode 31. The second external electrode 42 is provided on the other end surface 22 of the ceramic body 2, and electrically connected to the second internal electrode 32. The first external electrode 41 may be, as shown in FIG. 1, disposed to extend on the one end surface 21 of the ceramic body 2 and parts of side surfaces. It is to be noted that the "side surfaces" of the ceramic body 2 refer to all of the surfaces other than end surfaces (21 and 22). Likewise, the second external electrode 42 may be disposed to extend on the other end surface 22 of the ceramic body 2 and parts of the side surfaces. The first external electrode 41 and the second external electrode 42 include a metal component and a glass component. The glass component is added to promote sintering of the external electrodes, and provide the external electrodes with mechanical strength. The compositions of the external electrodes are not particularly limited, but may contain, for example, the metal component at 45 to 80 weight% and the glass component at 1 to 20 weight%. The contents of the metal component and glass component in the external electrodes can be identified by, for example, an energy dispersive X-ray analysis method (EDX). The composition of the glass component included in the external electrodes is not limited, but can be set appropriately depending on the intended use. The glass component included in the external electrodes may contain, for example, at least one selected from the group consisting of alkaline-earth metals, Cu, Si, Ti, Zn, alkali metals, Sr, Al, and Bi. The composition of the metal component included in the external electrodes is not particularly limited, but may contain, for example, at least one selected from the group consisting of Cu, CuO, and $Cu_2O$.

(Columnar Structure)

The ceramic electronic component 1 according to the present embodiment has, between the first external electrode 41 and the first internal electrode 31, a columnar structure 6 that provide electrical conduction at least between the first external electrode 41 and the first internal electrode 31. Likewise, the ceramic electronic component 1 has, between the second external electrode 42 and the second internal electrode 32, a columnar structure 6 that provide electrical conduction at least between the second external electrode 42 and the second internal electrode 32. The columnar structures 6 include the metal components included in the internal electrodes and the metal components included in the external electrodes.

The columnar structures 6 are believed to be formed in accordance with the mechanism explained below. In the ceramic electronic component 1 according to the present embodiment, the external electrodes (the first external electrode 41 and the second external electrode 42) are formed in a way that as will be described later, an external electrode paste including a metal component and a glass material is applied to the ceramic body 2 to form unfired external electrodes, and the unfired external electrodes are subjected to a baking treatment. The application of heat in the baking treatment causes the metal components included in the internal electrodes to diffuse partially into the external electrodes, and at the same time, causes the metal components included in the external electrodes to diffuse partially into the internal electrodes. In this regard, due to the differences between the diffusion rates of the metal components included in the external electrodes into the internal electrodes and the diffusion rates of the metal components included in the internal electrodes into the external electrodes, Kirkendall voids are formed near the external electrodes in contact with the internal electrodes, at the interfaces between the external electrodes and the ceramic body. For example, when the diffusion rate in the case of diffusion of the metal component included in the external electrode into the internal electrode is higher than the diffusion rate in the case of diffusion of the metal component included in the internal electrode into the external electrode, the amount of the diffusion of the metal component included in the external electrode into the internal electrode is larger than the amount of the diffusion of the metal component included in the internal electrode into the external electrode. As a result, the metal component which fails to fit into the volume of the internal electrode defined within the ceramic body 2 grows toward the external electrode, thereby forming the columnar structure 6. At the same time, the metal component in the external electrode diffuses into the internal electrode to be incorporated therein, thereby decreasing the amount of the metal component present near the external electrode in contact with the internal electrode, at the external electrode. As a result, Kirkendall voids are formed along the columnar structure 6 at the interface between the external electrode and the ceramic body 2. The formation of voids (Kirkendall voids) at the interfaces between the external electrodes and the ceramic body 2 as just described can accumulate the glass component included in the external electrode in the voids, and thus effectively form glass accumulations as will be described later. Thus, the amounts of the glass components present in the external electrodes are decreased, and as a result, deposition of the glass components can be suppressed on the external electrode surfaces. Furthermore, the metal components included in the external electrodes and the metal components included in the internal electrodes mutually transfer, thereby making it possible to improve the joint between the external electrodes and the internal electrodes. The ceramic electronic component according to the present embodiment can suppress deposition of the glass components on the external electrode surfaces, even when glass frit has a high softening point, when the baking temperature is high, and/or when the baking time is long. Therefore, sintering of the metal components in the external electrodes can be sufficiently promoted while suppressing deposition of the glass components. As a result, the generation of defects can be suppressed, such as ingress of water and solder bursts due to decreased density of the electrode.

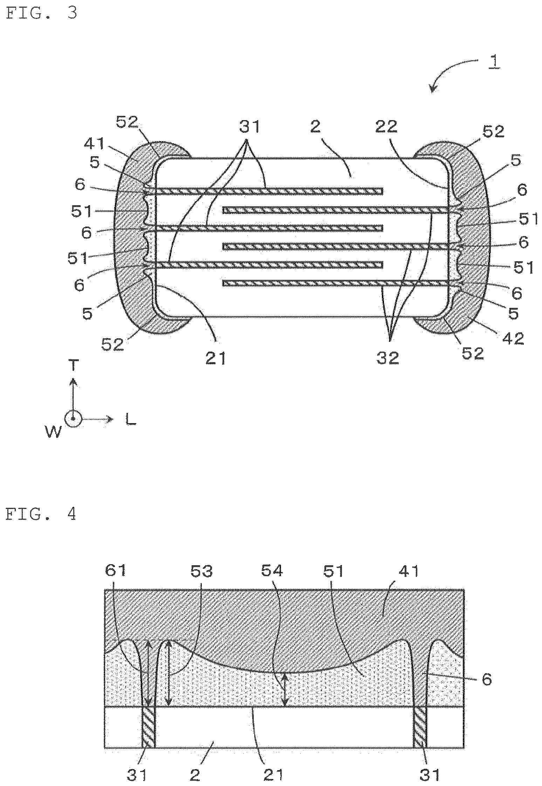

The columnar structures 6 are preferably larger than 5 μm in length. When the columnar structures 6 are larger than 5 μm in length, the increased amounts of the glass components present in the glass accumulations can thus effectively suppress deposition of the glass components on the external electrode surfaces, and further suppress defective plating. The columnar structures 6 are more preferably larger than 5 $\mu$m and 20 $\mu$m or less in length. When the columnar structures 6 are excessively large in length, end surfaces (WT surfaces) of baked external electrodes may have linear bumps produced, which is not preferable from the standpoint of appearance. When the columnar structures 6 are 20 $\mu$m or less in length, the great effect of preventing linear bumps from being produced as described above at the end surfaces (WT surfaces) of baked external electrodes can provide a favorable appearance. The columnar structures 6 are further preferably 10 $\mu$m to 15 $\mu$m in length. When the columnar structures 6 are 10 $\mu$m or more in length, the thicknesses of the glass accumulations can be further increased, and deposition of the glass components can be further suppressed on the external electrode surfaces. When the columnar structures 6 are 15 $\mu$m or less in length, linear bumps can be further effectively prevented from being produced as described above at the end surfaces (WT surfaces) of baked electrodes. It is to be noted that the length (denoted by reference symbol 61 in FIG. 4) of the columnar structure is considered equal to the maximum thickness of the glass accumulation formed along the columnar structure on the basis of the surface of the ceramic body as shown in FIG. 4 in this specification.

(Method of Calculating Length of Columnar Structure)

The lengths of the columnar structures 6 can be measured by, for example, polishing the ceramic electronic component 1 to a central part thereof along the LT surface to expose a cross section, and observing the exposed cross section with a scanning electron microscope (SEM) or the like.

The lengths of the columnar structures may be more objectively calculated by a method as explained below. It is to be noted that while the method explained below is explained with, as an example, a case where the external electrodes include Cu, whereas the internal electrodes include Pd and Ag, the lengths of the columnar structures can be similarly figured out in accordance with the following method, even when the external electrodes and the internal electrodes include metal components other than the metal components described above. First, the ceramic electronic component 1 is polished to a central part thereof along the LT surface to expose a cross section. The exposed cross section is observed with a scanning electron microscope (SEM) (acceleration voltage: 15.0 V, irradiation current: 50 nA), which is combined with a wavelength dispersive X-ray analyzer (WDX), thereby carrying out elemental mapping for Cu, Pd, and Ag elements. Based on the result of the elemental mapping, the diffusion distance of the Cu element into the internal electrode, and the diffusion distances of the Ag and Pd elements into the external electrode are calculated. Specifically, as for the Pd and Ag elements, the interface between the external electrode and the ceramic body is regarded as a starting point (distance - zero), and the distances are figured out at which the intensities for Ag and Pd reach 1/10 or less of the respective maximum intensities. As for the Cu element, because of a large amount of diffusion as compared with the Pd and Ag elements, the interface between the external electrode and the ceramic body is regarded as a starting point (distance = zero), and the distance is figured out at which the intensity for Cu reaches 1/5 or less of the maximum intensity.

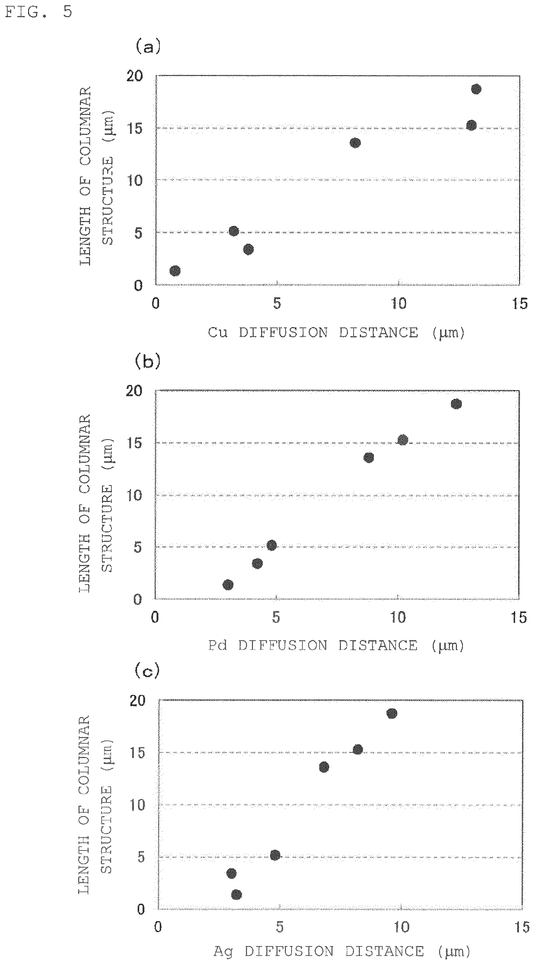

The diffusion distances are calculated as mentioned above for samples that differ in columnar structure length. FIGS. 5(a) to 5(c) show examples of graphs in which the lengths of the columnar structures are plotted versus the diffusion distances for each element. FIGS. 5(a), 5(b), and 5(c) are respectively graphs in which the lengths of the columnar structures are plotted versus the diffusion distances for the Cu element, the Pd element, and the Ag element. From FIGS. 5(a) to 5(c), it is determined that the diffusion distances for each element have correlations with the lengths of the columnar structures. The use of the approximate expressions calculated from the plots shown in FIGS. 5(a) to 5(c) can figure out the lengths of the columnar structures, based on the measurement results of the diffusion distances for each element.

The diffusion rates in the case of diffusion of the metal components included in the external electrodes (the first external electrode 41 and the second external electrode 42) into the internal electrodes (the first internal electrode 31 and the second internal electrode 32) are preferably higher than the diffusion rates in the case of diffusion of the metal components included in the internal electrodes into the external electrodes. Setting such diffusion rates can further promote the formation of the columnar structures. When the external electrodes and/or the internal electrodes include two or more metal elements, the diffusion rate of at least one of the metal elements included in the external electrodes has only to be higher than the diffusion rate of at least one of the metal elements included in the internal electrodes. The above mentioned relationship of difference in diffusion rate is more preferably met by approximately 10% or more of the metal component included in each of the external electrodes and internal electrodes. In this case, the generation of Kirkendall voids and columnar structures can be further promoted. It is to be noted that values in documents (for example, values mentioned in The Japan Institute of Metals and Materials (Ed.) "Metal Data Book", 3rd Ed., Maruzen) can be adopted for the values of the diffusion rates of the metal components.

The metal components included in the external electrodes and the internal electrodes can be selected appropriately so as to meet the above-mentioned conditions on diffusion rate. For example, the metal components of the external electrodes may include Cu, whereas the metal components of the internal electrodes may include at least Pd. In this case, the difference is increased between the diffusion rate in the case of diffusion of Cu into the internal electrodes and the diffusion rate in the case of diffusion of Pd into the external electrodes, thereby promoting the formation of the columnar structures 6 and Kirkendall voids. As a result, deposition of the glass components can be effectively suppressed on the external electrode surfaces. In the internal electrodes, the content of Pd is preferably 30 weight% or more, more preferably 50 weight% or more, further preferably 100 weight%, on the basis of the total weight of the metal components included in the internal electrodes. The content of Pd within the range mentioned above can further promote the formation of the columnar structures 6 and Kirkendall voids, and as a result, deposition of the glass components can be further effectively suppressed on the external electrode surfaces. The metal components included in the internal electrodes may further include Ag in addition to Pd. The diffusion rates in the case of diffusion of Ag into the external electrodes are higher than the diffusion rates in the case of diffusion of Pd into the external electrodes, and lower than the diffusion rates in the case of diffusion of Cu into the internal electrodes.

(Glass Accumulation)

The ceramic electronic component 1 according to the present embodiment has glass accumulations 5 formed in contact with the columnar structures 6 on both sides of the columnar structures 6. The glass accumulations 5 are formed by the accumulation of the glass components included in the external electrodes, in Kirkendall voids (voids) formed along the columnar structures 6 at the interfaces between the external electrodes and the ceramic body. The glass accumulations 5 may include metal components included in the external electrodes and ceramic components, in addition to the glass component included in the external electrodes. It is to be noted that the ceramic components which can be included in the glass accumulations are derived from a ceramic material included in the ceramic body. The ceramic electronic component 1 according to the present embodiment has the glass accumulations 5, thereby making it possible to suppress deposition of the glass components on the external electrode surfaces. As a result, plated layers can be prevented from being formed defectively in the formation of plated layers on the external electrode surfaces. Furthermore, the joints between the internal electrodes and the external electrodes are covered reliably with the glass accumulations 5, and thus, even if there is ingress of plating solutions or water from the outside, the presence of the glass accumulations 5 can block the ingress into the joints described above. Therefore, the internal electrodes can be kept from being peeled from the ceramic body 2, and electrical characteristics can be kept from being changed due to disconnection of the joints between the internal electrodes and the external electrodes. Furthermore, the formation of the glass accumulations 5 can reduce the thicknesses of glass layers (denoted by reference symbol 52 in FIG. 3) which can be formed between the external electrodes and the ceramic body 2 at corners where the external electrodes are more likely to be reduced in thickness, and as a result, at the corners, the glass layers can be prevented from being exposed at the surfaces of the external electrodes, and plated layers can be prevented from being formed defectively at the corners.

The shapes of glass accumulations 5 can be varied depending on the lengths of the columnar structures 6 and the wettability between the glass component and the ceramic body. Typically, as shown in FIG. 1, the thicknesses of the glass accumulations 5 near the columnar structure 6 are larger than the thickness in a location away from the columnar structure 6.

In the ceramic electronic component 1 according to the present embodiment, the difference between the basicity (B value) of the ceramic body 2 and the basicity of the glass component included in the glass accumulation 5 preferably has an absolute value of 0.02 or more. It is to be noted that the glass component included in the glass accumulation 5 is derived from the glass component included in the external electrode, and accordingly, the basicity of the glass component included in the glass accumulation 5 is equal to the basicity of the glass component included in the external electrode. Hereinafter, the glass component included in the glass accumulation 5 will be also referred to simply as a "glass component". The absolute value ($|\Delta B|$) of the difference (difference in basicity) between the basicity of the ceramic body 2 and the basicity of the glass component provides an indication of wettability between the ceramic body 2 and the glass component. As the absolute value of the difference is larger between the basicity of the ceramic body 2 and the basicity of the glass component, there is a tendency to increase the affinity between the ceramic body 2 and the glass component, thereby increasing the wettability. As the wettability is higher between the ceramic body 2 and the glass component, the formation of the glass accumulation is promoted at the interface between the external electrode and the ceramic body 2. Therefore, the selection of the ceramic body and glass components with appropriate basicities can improve the wettability of the glass components to the ceramic body 2, and thus increase the amounts of the glass components accumulated in the glass accumulations. As a result, the amounts of the glass components present in the external electrodes can be reduced, and deposition of the glass components can be effectively suppressed on the external electrode surfaces. The absolute value ($|\Delta B|$) of the difference between the basicity of the ceramic body 2 and the basicity of the glass component included in the glass accumulation 5 is more preferably 0.06 to 0.19. The ($|\Delta B|$) of 0.06 or more further increases the wettability between the ceramic body 2 and the glass component, thereby further promoting the formation of the glass accumulation 5. The ($|\Delta B|$) of 0.19 or less can inhibit the overreaction between the glass component and the ceramic body 2, and thus prevent the ceramic body 2 from being cracked or the like by the overreaction. The basicities of the ceramic body 2 and glass component can be set appropriately by adjusting the compositions of the ceramic material and glass material used.

(Method of Calculating Basicity)

A method of calculating the basicities (B values) of the ceramic body and glass component will be described below. The basicity of an oxide melt composed of multiple oxides can be expressed by a mean oxygen ion activity (conceptual basicity) that is calculated from the composition of a system under consideration. In an oxide melt, the B value as a basicity parameter is expressed by the following formula (1).

[Mathematical Formula 1]

$$B = \sum_i n_i B_i \qquad (1)$$

In the formula, $n_i$ represents a composition ratio of an oxide $M_iO$ constituting an oxide melt system, and $B_i$ represents a basicity parameter of the oxide $M_iO$. The basicity parameter $B_i$ of the oxide $M_iO$ is obtained in accordance with the following procedure. The $M_i$-O bonding force of the oxide $M_iO$ can be expressed by the attraction between the cation ($M_i$ ion) and the oxygen ion, which is expressed by the following formula (2).

[Mathematical Formula 2]

$$A_i = \frac{Z_i \cdot Z_{O^{2-}}}{(r_i + r_{O^{2-}})^2} = \frac{2Z_i}{(r_i + 1.4)^2} \qquad (2)$$

In the formula, $A_i$ represents the attraction between a cation and an oxygen ion, $Z_i$ represents the valence of the cation ($M_i$ ion), $r_i$ represents the ionic radius (Å) of the cation ($M_i$ ion), $Z_{O2-}$ represents the valence of the anion (oxygen ion), and $r_{O2-}$ represents the ionic radius (Å) of the anion (oxygen ion). The oxygen-donating ability (that is, basicity) of the oxide $M_iO$ is given by the reciprocal of $A_i$, and the following formula (3) holds.

[Mathematical Formula 3]

$$B_i^0 \equiv \frac{1}{A_i} \qquad (3)$$

In this regard, in order to handle the oxygen-donating ability ideologically and quantitatively, the $B_i^0$ value obtained from the formula (3) mentioned above is made into an indicator. The $B_i^0$ value obtained from the formula (3) is substituted into the following formula (4) for recalculation, thereby allowing the basicity to be treated quantitatively for all oxides.

[Mathematical Formula 4]

$$B_i = \frac{B_i^0 - B_{SiO_2}^0}{B_{CaO}^0 - B_{SiO_2}^0} \qquad (4)$$

It is to be noted that the B value ($B_{CaO}$) of CaO and the B value ($B_{SiO2}$) of $SiO_2$ are defined respectively as 1.00 ($B_{CaO}^0$ = 1.43) and 0.00 ($B_{SiO2}^0$ = 0.41) for the indicator.

(First Modification Example)

Next, a first modification example of the ceramic electronic component 1 according to the present embodiment will be described with reference to FIG. 2. The ceramic electronic component 1 according to the first modification example includes a plurality of first internal electrodes 31 and a plurality of second internal electrodes 32. Therefore, multiple columnar structures 6 are formed on each of one and the other end surfaces 21 and 22 of a ceramic body 2. In this case, in a region sandwiched by columnar structures 6 adjacent to each other, a glass accumulation formed in contact with one of the columnar structures and a glass accumulation formed in contact with the other thereof are connected together, and thus formed in an integrated manner. The glass accumulation formed in an integrated manner is denoted by reference symbol 51 in FIG. 2. The glass accumulation is connected together and thus formed in an integrated manner as just described, thereby making it possible to accumulate glass components selectively in the region sandwiched by the columnar structures 6 adjacent to each other. As a result, at corners where external electrodes are more likely to be reduced in thickness, glass layers (denoted by reference symbol 52 in FIG. 3) which can be formed between the external electrodes and the ceramic body 2 can be further reduced in thickness. Therefore, even when the external electrodes are small in thickness at the corners, the glass layers can be prevented from being exposed at the surfaces of the external electrodes, and plated layers can be effectively prevented from being formed defectively at the corners. Furthermore, the glass accumulation is formed in an integrated manner in the region sandwiched by the columnar structures adjacent to each other, thereby making it possible to increase the thickness of the glass accumulation. Therefore, deposition of the glass components can be further reduced on the surfaces of the external electrodes, and defective formation of plated layers can be further reduced over the entire surfaces of the external electrodes.

The shapes of glass accumulations 51 formed in an integrated manner in the region sandwiched by the columnar structures 6 adjacent to each other can be varied depending on the lengths of the columnar structures 6 and the wettability between the glass component and the ceramic body. Typically, as shown in FIGS. 2 and 4, the glass accumulation 51 formed in an integrated manner in the region sandwiched by the columnar structures 6 adjacent to each other has a thickness 53 near the columnar structure 6, which is larger than a thickness 54 in the center.

In the ceramic electronic component according to the first modification example, the distance between internal electrodes adjacent to each other at the end surface of the ceramic body 2 is preferably 107 $\mu$m or less. When the distance between the internal electrodes is 107 $\mu$m or less, the distance can be reduced between the adjacent columnar structures 6. As the distance is smaller between the adjacent columnar structures 6, voids are more likely to be formed between the external electrode and the ceramic body 2. Therefore, in the region sandwiched by the columnar structures 6 adjacent to each other, the glass accumulation formed in contact with one of the columnar structures and the glass accumulation formed in contact with the other thereof are more likely to be connected together, and thus formed in an integrated manner. Thus, the thickness of the glass accumulation 51 formed in the region sandwiched by the columnar structures adjacent to each other is increased, thereby increasing the amount of the glass component accumulated in the glass accumulation 51, and as a result, deposition of the glass component can be effectively suppressed on the external electrode surfaces. The distance between internal electrodes adjacent to each other at the end surface of the ceramic body 2 is more preferably greater than 26 $\mu$m, and 107 $\mu$m or less. When the distance between the internal electrodes is greater than 26 $\mu$m, the amount of the glass component present in the glass accumulation can be increased, and deposition of the glass component can be further suppressed on the external electrode surfaces. The distance between internal electrodes adjacent to each other at the end surface of the ceramic body 2 is further preferably 58 $\mu$m to 77 $\mu$m. When the distance between the internal electrodes is 77 $\mu$m or less, deposition of the glass component can be further suppressed on the external electrode surfaces.

The center of the glass accumulation 51 is preferably greater than 2.2 $\mu$m in thickness. The thickness greater than 2.2 $\mu$m in the center increases the amount of the glass component accumulated in the glass accumulation 51, and can thus effectively suppress deposition of the glass components on the external electrode surfaces. The center of the glass accumulation 51 is more preferably greater than 2.2 $\mu$m and 10 $\mu$m or less in thickness. When the center is excessively large in thickness, end surfaces (WT surfaces) of baked external electrodes may have bumps produced, which is not preferable from the standpoint of appearance. When the center is 10 $\mu$m or less in thickness, the great effect of preventing bumps from being produced as described above at the end surfaces (WT surfaces) of baked external electrodes can provide a favorable appearance. The center of the glass accumulation 51 is further preferably greater than 2.2 $\mu$m and 5 $\mu$m or less in thickness. It is to be noted that the amount of the glass component present in the glass accumulation is determined by the volume of the glass accumulation. Thus, for example, even when the thickness of the glass accumulation in the center thereof has a relatively small value, the whole volume of the glass accumulation is increased in the case of a larger distance between internal electrodes, and deposition of the glass components on the external electrode surfaces can be thus suppressed sufficiently.

(Second Modification Example)

Next, a second modification example of the ceramic electronic component 1 according to the present embodiment will be described with reference to FIG. 3. As shown in FIG. 3, the ceramic electronic component 1 may further include glass layers 52 formed in regions where glass accumulations (5 and 51) are not formed, at the interfaces between external electrodes (a first external electrode 41 and a second external electrode 42) and the ceramic body 2. The glass layers 52 are typically formed in an integrated manner with the glass accumulations (5 and 51). The glass layers 52 may include the metal component included in the external electrodes and ceramic component, in addition to the glass components included in the external electrodes. The glass layers 52 serve to provide fixing strength between the ceramic body 2 and the external electrodes, thereby improving the mechanical strength of the ceramic electronic component 1. The ceramic electronic component 1 according to the present embodiment has the glass accumulations (5 and 51), and can thus selectively accumulate, in the glass accumulations, the glass component included in the external electrodes. Therefore, the glass layers 52 can be reduced in thickness at corners where the external electrodes are more likely to be reduced in thickness. As a result, even when the external electrodes are reduced in thickness at the corners, the glass layers can be prevented from being exposed at the surfaces of the external electrodes, and plated layer can be effectively prevented from being formed defectively at the corners. The glass layers 52 are preferably 5 $\mu$m or less in average thickness. When the average thickness is 5 $\mu$m or less, the glass layers 52 can be effectively prevented from being exposed at the external electrode surfaces at the corners of the ceramic electronic component 1. The glass layers 52 are more preferably 0.1 to 3 $\mu$m, further preferably 0.1 to 2.0 $\mu$m in average thickness. The average thickness within the range mentioned above can further effectively prevent the glass layers 52 from being exposed at the external electrode surfaces.

[Method for Manufacturing Ceramic Electronic Component]

Next, an example of a method for manufacturing the ceramic electronic component 1 according to an embodiment of the present invention will be described, but the method for manufacturing the ceramic electronic component according to the present invention is not limited to the following method. The method according to the present embodiment includes the steps of: forming an unfired internal electrode by applying an internal electrode paste including conductive particles onto one principal surface of a ceramic green sheet; forming a stacked body with unfired first and second internal electrodes disposed therein by stacking multiple ceramic green sheets with unfired internal electrodes formed; obtaining a ceramic body with first and second internal electrodes disposed therein by firing the stacked body; forming unfired first and second external electrodes by applying an external electrode paste including conductive particles and a glass material onto both end surfaces of the ceramic body; and forming external electrodes by applying a baking treatment to the unfired first and second external electrodes. It is to be noted that the "conductive particles" include a single metal or a metal compound such as an alloy and a metal oxide in this specification.

(Preparation of Ceramic Green Sheet)

Ceramic green sheets for the formation of a ceramic body can be prepared in accordance with the following procedure. A ceramic material and an organic solvent are mixed, and this mixture is, with the addition of a binder, a plasticizer, etc. thereto, further mixed to obtain slurry. This slurry is subjected to shape forming by a doctor blade method or the like, thereby providing ceramic green sheets that have a predetermined thickness. The composition of the ceramic material for use in the preparation of the ceramic green sheets is not particularly limited, but may include, for example, at least one element selected from the group consisting of Mn, Ni, Fe, Co, and Al.

The composition of the ceramic material included in the ceramic green sheets is preferably set such that the difference (difference in basicity) has an absolute value of 0.02 or more between the basicity of the ceramic material and the basicity of a glass material that is included in an external electrode paste as will be described later. The basicity of the ceramic material can be calculated by the method described above. When the difference in basicity has an absolute value of 0.02 or more, the wettability between the ceramic body and the glass material included in the external electrode paste is increased in the formation of external electrodes by a baking treatment, thus increasing the amount of the glass component accumulated in the glass accumulations formed at the interfaces between the external electrodes and the ceramic body. As a result, the amounts of the glass components present in the external electrodes can be reduced, and deposition of the glass components can be effectively suppressed on the external electrode surfaces. The thicknesses of the ceramic green sheets will be described later.

(Preparation of Internal Electrode Paste)

An internal electrode paste for the formation of internal electrodes can be prepared by blending, in predetermined proportions, conductive particles, an organic vehicle obtained by dissolving a binder such as an ethyl cellulose-based resin in an organic solvent such as a turpentine oil, and additives such as a dispersant in some cases, and mixing the blend with the use of a triple roll mill or the like. The conductive particles included in the internal electrode paste are not particularly limited, but may include, for example, at least one selected from Ag, Pd, and Ag-Pd alloys. The conductive particles are preferably powdery. When the conductive particles are powdery, the conductive particles can be dispersed uniformly in the internal electrode paste, and as a result, homogeneous internal electrodes can be formed.

(Preparation of External Electrode Paste)

An external electrode paste for the formation of external electrodes can be prepared by blending, in predetermined proportions, conductive particles, a glass material such as glass frit, an organic vehicle obtained by dissolving a binder such as an acrylic-based resin in an organic solvent such as a turpentine oil, and additives such as a dispersant in some cases, and mixing the blend with the use of a triple roll mill or the like. The conductive particles included in the external electrode paste are not particularly limited, but may include, for example, at least one selected from Cu, $Cu_2O$, CuO, and Ni. The conductive particles are preferably powdery. When the conductive particles are powdery, the conductive particles can be dispersed uniformly in the external electrode paste, and as a result, homogeneous external electrodes can be formed.

The glass material is added to promote sintering of the external electrodes, and provide the eternal electrodes with mechanical strength. The composition of the glass material included in the external electrode paste is not particularly limited, but may include, for example, at least one element selected from the group consisting of alkaline-earth metals, Cu, Si, Ti, Zn, alkali metals, Si, Al, and Bi. The composition of the glass material included in the external electrode paste is preferably set such that the difference (difference in basicity) has an absolute value of 0.02 or more between the basicity of the ceramic material included in the ceramic green sheets and the basicity of the glass material. The basicity of the glass material can be calculated by the method described above. Setting the composition of the glass material as just described can effectively suppress deposition of the glass components on the external electrode surfaces.

In a subsequent baking treatment, the metal components included in the external electrodes diffuse into the internal electrodes, whereas the metal components included in the internal electrodes diffuse into the external electrodes. The metal components included in the external electrodes are derived from the conductive particles included in the external electrode paste, whereas the metal components included in the internal electrodes are derived from the conductive particles included in the internal electrode paste. The conductive particles included in the external electrode paste and the conductive particles included in the internal electrode paste are preferably selected such that the diffusion rates in diffusion of the metal components included in the external electrodes into the internal electrodes are higher than the diffusion rates in diffusion of the metal components included in the internal electrodes into the external electrodes in the baking treatment. Selecting the conductive particles as just described can promote the formation of columnar structures between the internal electrodes and the external electrodes. Specifically, for example, the conductive particles included in the internal electrode paste preferably include at least Pd, whereas the conductive particles included in the external electrode paste preferably include at least one of Cu, $Cu_2O$, and CuO. In this case, the difference can be increased between the diffusion rate in the case of diffusion of the metal component (that is, Cu) included in the external electrode into the internal electrode and the diffusion rate in the case of diffusion of the metal component (that is, Pd) included in the internal electrode into the external electrode. As a result, the formation of columnar structures can be further promoted, and the amounts of the glass components accumulated in glass accumulations formed along the columnar structures can be further increased.

(Formation of Unfired Internal Electrode)

The internal electrode paste is applied in a predetermined pattern onto one principal surface of the ceramic green sheet. The method for applying the internal electrode paste is not particularly limited, but a method such as screen printing can be selected appropriately. Hereinafter, the internal electrode paste applied in a predetermined pattern to the ceramic green sheet will be also referred to as an "unfired internal electrode", or an "unfired first internal electrode" and an "unfired second internal electrode".

(Formation of Stacked Body)

Multiple ceramic green sheets with unfired internal electrodes formed as described above are stacked to form a stacked body with unfired first and second internal electrodes disposed therein. The unfired first and second internal electrodes are disposed such that the unfired first internal electrodes and the unfired second internal electrodes are partially opposed to each other with the ceramic green sheets interposed therebetween. The number of stacked ceramic green sheets with unfired internal electrodes formed can be set appropriately depending on the numbers of first and second internal electrodes to be provided. The stacked body obtained may be, in some cases, subjected to pressure bonding such that the total thickness is a predetermined thickness, and cut into a predetermined size with a micro cutter or the like.

The distance between the unfired internal electrodes adjacent to each other is preferably 214 $\mu$m or less at one end surface of the unfired stacked body. When the distance between the unfired internal electrodes adjacent to each other is 214 $\mu$m or less, the distance between internal electrodes adjacent to each other can be made 107 $\mu$m or less at one end surface of a ceramic body of a ceramic electronic component obtained. The distance between the unfired internal electrodes adjacent to each other can be set by appropriately adjusting the thickness of the ceramic green sheet and the number of the ceramic green sheets stacked as described above. The unfired ceramic green sheet is preferably 214 $\mu$m or less, more preferably 20 $\mu$m to 60 $\mu$m in thickness. When the thickness of the ceramic green sheet falls within the range mentioned above, the distance between internal electrodes adjacent to each other can be, by appropriately adjusting the number of ceramic green sheets stacked, made 107 $\mu$m or less at one end surface of a ceramic body of a ceramic electronic component obtained.

(Firing)

The stacked body described above is subjected to firing, thereby providing a ceramic body with first and second internal electrodes disposed therein. The firing conditions can be set appropriately depending on materials used and intended uses. For example, firing may be carried out at a top temperature of approximately 1000°C to 1200°C for a period of treatment time (total time of in-out) of approximately 1400 minutes under the air atmosphere.

(Formation of Unfired External Electrode)

An external electrode paste including conductive particles and a glass material is applied in predetermined shapes to both end surfaces of the ceramic body obtained. The method for applying the external electrode paste is not particularly limited, but a method such as a dip (immersion) method can be selected appropriately. Hereinafter, the external electrode paste applied in predetermined shapes to the both end surfaces of the ceramic body will be also referred to as an "unfired external electrode", or an "unfired first external electrode" and an "unfired second external electrode". The unfired first external electrode is formed to be brought into contact with the first internal electrodes, whereas the unfired second external electrode is formed to be brought into contact with the second internal electrodes. Applying the external electrode paste as just described can electrically connect a first external electrode to the first internal electrodes and a second external electrode to the second internal electrodes in a ceramic electronic component obtained.

(Baking Treatment)

The unfired first and second external electrodes are subjected to a baking treatment, thereby forming external electrodes. In the baking treatment, the metal components included in the external electrodes diffuse into the internal electrodes, whereas the metal components included in the internal electrodes diffuse into the external electrodes. In this regard, the diffusion rates in the diffusion of the metal components included in the external electrodes into the internal electrodes are higher than the diffusion rates in the diffusion of the metal components included in the internal electrodes into the external electrodes. Therefore, columnar structures that provide conduction at least between the external electrodes and the internal electrodes can be formed between the external electrodes and the internal electrodes. Furthermore, the glass components included in the external electrode paste accumulates in Kirkendall voids formed along the columnar structures, thereby forming glass accumulations in contact with the columnar structures on both sides of the columnar structures. As a result, the glass components included in the external electrodes can be accumulated selectively in the glass accumulations, and deposition of the glass components can be suppressed on the external electrode surfaces.
The conditions for the baking treatment can be set appropriately depending on the composition of the external electrode paste, etc. The baking treatment can be carried out, for example, under an atmosphere of $N_2/H_2/O_2$. The baking treatment is preferably carried out at a top temperature of 800°C to 900°C. The baking treatment carried out in the temperature range mentioned above can further promote the formation of the columnar structures and glass accumulations. As a result, deposition of the glass components on the external electrode surfaces can be further effectively suppressed.
On the surfaces of the external electrodes formed, plated layers may be formed by electrolytic plating, and for example, Ni plated layers may be formed on the surfaces of the external electrodes, and Sn plated layers may be formed thereon. The ceramic electronic component manufactured by the method according to the present embodiment can suppress deposition of the glass components on the surfaces of the external electrodes.
Therefore, plated layers can be kept from being formed defectively.

EXAMPLES

Ceramic electronic components according to examples 1 to 11 were prepared in accordance with the following procedure. It is to be noted that the ceramic electronic components according to the examples 1 to 11 are NTC thermistors.

(Preparation of Ceramic Green Sheet)

Two types of ceramic green sheets C-1 and C-2 were prepared in accordance with the procedure described below. As a ceramic material, a ceramic material powder containing Mn, Ni, and Fe as main constituents was used in the case of C-1, whereas a ceramic material powder containing Mn, Ni, Co, and Al as main constituents was used in the case of C-2. The ceramic material and an organic solvent were mixed, and this mixture was, with the addition of a binder and a plasticizer thereto, further mixed to obtain slurry. This slurry was subjected to shape forming by a doctor blade method or the like, thereby preparing ceramic green sheets C-1 and C-2 with predetermined thicknesses. Table 1 shows the results of calculating the basicity (B value) for C-1 and C-2.

[Table 1]

| Sample Number | Composition System | B value |
|---|---|---|
| C-1 | Mn-Ni-Fe | 0.46 |
| C-2 | Mn-Ni-Co-Al | 0.38 |

(Preparation of Internal Electrode Paste)

Four types of internal electrode pastes EP-1 to EP-4 were prepared in accordance with the following procedure. An ethyl cellulose-based resin was mixed and dissolved in a turpentine oil, thereby preparing an organic vehicle for the internal electrode pastes. Mixtures containing: 33.3 volume% of conductive particles containing an Ag powder and a Pd powder in proportions as shown in Table 2 below; and 66.7 volume% of the organic vehicle described above were subjected to kneading with a triple roll mill to disperse the conductive particles in the organic vehicle, thereby providing the internal electrode pastes EP-1 to EP-4.

[Table 2]

| Sample Number | Internal Electrode Paste | | |
|---|---|---|---|
| | Conductive Particles | | Organic Vehicle Content (volume%) |
| | Ag : Pd (ratio by weight) | Content (volume%) | |
| EP-1 | 100:0 | 33.3 | 66.7 |
| EP-2 | 70:30 | 33.3 | 66.7 |
| EP-3 | 30:70 | 33.3 | 66.7 |
| EP-4 | 0:100 | 33.3 | 66.7 |

(Preparation of External Electrode Paste)

Two types of external electrode pastes were prepared in accordance with the following procedure. An acrylic-based resin was mixed and dissolved in a turpentine oil, thereby preparing an organic vehicle for the external electrode pastes. Glass frit G-1 or G-2 of the composition shown in Table 3 below was used as a glass material. A mixture containing 5 volume% of glass frit, 22 volume% of a Cu powder as conductive particles, and 73 volume% of the organic vehicle described above was subjected to kneading with a triple roll mill to disperse the Cu powder and the glass frit in the organic vehicle, thereby providing an external electrode paste. Table 3 shows the results of calculating the basicity (B value) for the glass frit G-1 and G-2.

[Table 3]

| Sample Number | Content (weight%) | | | | | | | | | | B value |
|---|---|---|---|---|---|---|---|---|---|---|---|
| | $Al_2O_3$ | $B_2O_3$ | BaO | CuO | $SiO_2$ | $TiO_2$ | ZnO | ZrO | Alkali Metal | Alkaline-Earth Metal* | |
| G-1 | 6.9 | 15.1 | 49.4 | - | 6.1 | - | 17.7 | - | - | 4.8 | 0.65 |
| G-2 | 4.1 | 17 | - | 5.7 | 50.4 | 2.1 | 3 | 6.5 | 11.2 | - | 0.40 |
| *: Total Amount of Alkaline-Earth Metals other than Ba | | | | | | | | | | | |

[Example 1]

The ceramic electronic component according to the example 1 was manufactured in accordance with the following procedure. Ceramic green sheets including the ceramic material C-1 were used according to the present example. The internal electrode paste EP-3 was applied in a predetermined pattern onto one principal surface of the ceramic green sheet, thereby forming an unfired internal electrode. The multiple ceramic green sheets with no unfired internal electrode formed and ceramic green sheets with the unfired internal electrodes formed were stacked to obtain a stacked body. In this regard, three ceramic green sheets (ceramic green sheets with no unfired internal electrode formed) of approximately 40 $\mu$m in thickness were sandwiched between two unfired first internal electrodes (or second internal electrodes) adjacent to each other. This configuration has allowed, as will be described later, the distance between internal electrodes to be made approximately 77 $\mu$m in a ceramic electronic component obtained. The stacked body obtained was subjected to pressure bonding, and cut into predetermined dimensions, thereby providing a chip-type laminated body.

The chip-type laminated body was subjected to firing for approximately 1400 minutes at a top temperature of approximately 1000°C to 1200°C under the air atmosphere, thereby providing a ceramic body with internal electrodes disposed therein.

An external electrode paste including the glass frit G-1 was used as an external electrode paste according to the present example. This external electrode paste was applied to the ceramic body by a dip method to form unfired first and second external electrodes. The unfired first and second external electrodes were subjected to a baking treatment for a period of treatment time (total time of in-out) of 17 minutes at a top temperature of 830°C in a tunnel furnace controlled to an atmosphere of $N_2/H_2/O_2$, thereby forming first and second external electrodes.

On the surfaces of the external electrodes formed, Ni plated layers were formed by electrolytic plating, and on the Ni plated layers, Sn plated layers were further formed by electrolytic plating.

[Example 2]

The ceramic electronic component according to the example 2 was prepared in accordance with the same procedure as in the example 1, except for the use of the external electrode paste including the glass frit G-2.

[Example 3]

The ceramic electronic component according to the example 3 was prepared in accordance with the same procedure as in the example 2, except for the use of the ceramic green sheets C-2.

[Example 4]

The ceramic electronic component according to the example 4 was prepared in accordance with the same procedure as in the example 1, except that the thickness of the ceramic green sheet and the number of the ceramic green sheets stacked were set such that the distance between internal electrodes adjacent to each other was 58 $\mu$m in the ceramic electronic component obtained.

[Example 5]

The ceramic electronic component according to the example 5 was prepared in accordance with the same procedure as in the example 1, except that the thickness of the ceramic green sheet and the number of the ceramic green sheets stacked were set such that the distance between internal electrodes adjacent to each other was 107 $\mu$m in the ceramic electronic component obtained.

[Example 6]

The ceramic electronic component according to the example 6 was prepared in accordance with the same procedure as in the example 1, except that the thickness of the ceramic green sheet and the number of the ceramic green sheets stacked were set such that the distance between internal electrodes adjacent to each other was 116 $\mu$m in the ceramic electronic component obtained.

[Example 7]

The ceramic electronic component according to the example 7 was prepared in accordance with the same procedure as in the example 1, except for the use of the internal electrode paste EP-1.

[Example 8]

The ceramic electronic component according to the example 8 was prepared in accordance with the same procedure as in the example 1, except for the use of the internal electrode paste EP-2.

[Example 9]

The ceramic electronic component according to the example 9 was prepared in accordance with the same procedure as in the example 1, except for the use of the internal electrode paste EP-4.

[Example 10]

The ceramic electronic component according to the example 10 was prepared in accordance with the same procedure as in the example 1, except that the baking treatment for external electrodes was carried out for 17 minutes at 810°C.

[Example 11]

The ceramic electronic component according to the example 11 was prepared in accordance with the same procedure as in the example 1, except that the baking treatment for external electrodes was carried out for 17 minutes at 850°C.

Table 4 shows the conditions for manufacturing the ceramic electronic components according to the examples 1 to 11, and the results of calculating the absolute value $|\Delta B|$ of the difference between the basicity of the ceramic material and the basicity of the glass material.

[Table 4]

|  | Ceramic Material | Glass Material | Internal Electrode Paste | Baking Temperature (°C) | $|\Delta B|$ |
|---|---|---|---|---|---|
| Example 1 | C-1 | G-1 | EP-3 | 830 | 0.19 |
| Example 2 | C-1 | G-2 | EP-3 | 830 | 0.06 |
| Example 3 | C-2 | G-2 | EP-3 | 830 | 0.02 |
| Example 4 | C-1 | G-1 | EP-3 | 830 | 0.19 |
| Example 5 | C-1 | C-1 | EP-3 | 830 | 0.19 |
| Example 6 | C-1 | C-1 | EP-3 | 830 | 0.19 |
| Example 7 | C-1 | G-1 | EP-1 | 830 | 0.19 |
| Example 8 | C-1 | G-1 | EP-2 | 830 | 0.19 |
| Example 9 | C-1 | G-1 | EP-4 | 830 | 0.19 |
| Example 10 | C-1 | G-1 | EP-3 | 810 | 0.19 |
| Example 11 | C-1 | G-1 | EP-3 | 850 | 0.19 |

[Measurement of Distance between Internal Electrodes]

For the ceramic electronic components according to the examples 1 to 11, the distance between internal electrodes adjacent to each other was measured in accordance with the following procedure. The ceramic electronic components according to the respective examples were polished to central parts along the LT surfaces to expose cross sections. The exposed cross sections were observed with a SEM, thereby measuring the distances between the internal electrodes. The results are shown in Table 5 below.

[Measurement of Length of Columnar Structure]

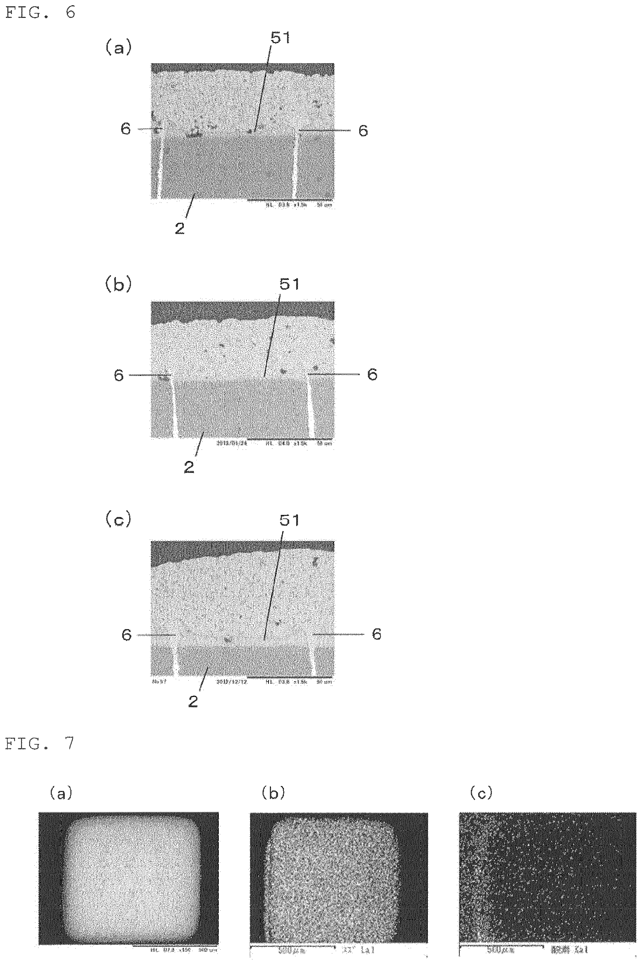

For the ceramic electronic components according to the examples 1 to 11, the length of a columnar structure was measured in accordance with the following procedure. The ceramic electronic components according to the respective examples were polished to central parts along the LT surfaces to expose cross sections. The exposed cross sections were observed with a SEM, thereby measuring the lengths of the columnar structures. When the length of the columnar structure was greater than 10 $\mu$m, the component was determined to be "good (O)", when the length was greater than 5 $\mu$m, and 10 $\mu$m or less, the component was determined to be "pass ($\Delta$)", or when the length was 5 $\mu$m or less, the component was determined to be "defective ($\times$)". The results are shown in Table 5. In addition, FIGS. 6(a) to 6(c) representatively show SEM images of columnar structures in the ceramic electronic components according to the examples 1, 10, and 11.

[Measurement of Thickness of Glass Accumulation]

For the ceramic electronic components according to the examples 1 to 11, the thickness of a glass accumulation was measured in accordance with the following procedure. The ceramic electronic components according to the respective examples were polished to central parts along the LT surfaces to expose cross sections. The exposed cross sections were observed with a SEM. In a region sandwiched by columnar structures adjacent to each other, the thickness was measured in the center of a glass accumulation where a glass accumulation in contact with one of the columnar structures and a glass accumulation in contact with the other thereof were connected together and thus formed in an integrated manner. When the thickness in the center was greater than 5 $\mu$m, the component was determined to be "good (O)", when the thickness was greater than 2.2 $\mu$m, but 5 $\mu$m or less, the component was determined to be "pass ($\Delta$)", or when the thickness was 2.2 $\mu$m or less, the component was determined to be "defective ($\times$)".

[Evaluation of Plating Property]

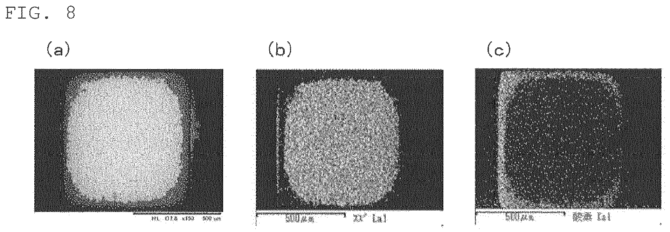

For the ceramic electronic components according to the examples 1 to 11, the evaluation of plating property was determined in accordance with the following procedure. The external electrode surfaces of the ceramic electronic components according to the respective examples were subjected to measurement by EDX (energy dispersive X-ray analysis, applied voltage: 15 kV), and to elemental mapping. FIGS. 7 and 8 representatively show the results of the elemental mapping in the examples 1 and 7. FIGS. 7(a) to 7(c) respectively show a SEM image of the external electrode surface of the ceramic electronic component according to the example 1, the result of Sn elemental mapping on the external electrode surface, and the result of O elemental mapping on the external electrode surface. FIGS. 8(a) to 8(c) respectively show a SEM image of the external electrode surface of the ceramic electronic component according to the example 7, the result of Sn elemental mapping on the external electrode surface, and the result of O elemental mapping on the external electrode surface. The Sn in the mapping in FIGS. 7(b) and 8(b) is derived from the Sn plated layers. The O in the mapping in FIGS. 7(c) and 8(c) is derived from the glass components present in the external electrodes. It is believed that plated layers were formed in the regions from which Sn was detected, whereas no plated layer was formed in the regions from which O was detected. When a part without any plated layer formed was not found by the EDX measurement, the component was determined to be "good (O)", when the area of a part present without any plated layer formed was 5% or less with respect to the entire surface area of the external electrode, the component was determined to be "pass ($\Delta$)", or when the area of a part without any plated layer formed was greater than 5%, the component was determined to be "defective ($\times$).

[Table 5]

|  | Distance between Internal Electrodes ($\mu$m) | Length of Columnar Structure ($\mu$m) | Thickness of Glass Accumulation ($\mu$m) | Plating Property | Comprehensive Evaluation |
|---|---|---|---|---|---|
| Example 1 | 77 | O | O | O | O |
| Example 2 | 77 | O | O | O | O |
| Example 3 | 77 | O | $\Delta$ | $\Delta$ | $\Delta$ |
| Example 4 | 58 | O | O | O | O |
| Example 5 | 107 | O | O | O | O |

(continued)

|  | | Distance between Internal Electrodes (μm) | Length of Columnar Structure (μm) | Thickness of Glass Accumulation (μm) | Plating Property | Comprehensive Evaluation |
|---|---|---|---|---|---|---|
| | Example 6 | 116 | ○ | × | Δ | Δ |
| | Example 7 | 77 | × | × | × | × |
| | Example 8 | 77 | Δ | Δ | Δ | Δ |
| | Example 9 | 77 | ○ | ○ | ○ | ○ |
| | Example 10 | 77 | ○ | Δ | ○ | Δ |
| | Example 11 | 77 | ○ | ○ | ○ | ○ |

It has been confirmed that the columnar structures grew to sufficient lengths in the ceramic electronic components according to the examples 1 to 6 and 9 to 11. This is believed to be because the differences were sufficiently large between the diffusion rates in diffusion of the metal components included in the external electrodes into the internal electrodes and the diffusion rates in diffusion of the metal components included in the internal electrodes into the external electrodes. From a comparison made between the examples 1 and 7 to 9, it is determined that the lengths of the columnar structures were larger as the Pd contents were higher in the metal components included in the internal electrodes. This is believed to be due to the fact that the differences between the diffusion rates of Cu in the external electrodes into the internal electrodes and the diffusion rates of Pd in the internal electrodes into the external electrodes were larger than the differences between the diffusion rates of Cu in the external electrodes into the internal electrodes and the diffusion rates of Ag in the internal electrodes into the external electrodes.

It has been confirmed that sufficiently thick glass accumulations were formed in the ceramic electronic components according to the examples 1 and 2. This is believed to be due to the fact that columnar structures that had grown to sufficient lengths were formed in the ceramic electronic components, and the difference between the basicity of the ceramic body and the basicity of the glass component in the external electrode was larger than 0.02 in absolute value ($|\Delta B|$), and the wettability of the glass component to the ceramic body was accordingly high. As the wettability of the glass component to the ceramic body is higher, the glass component included in the external electrode tends to be more likely to transfer toward the ceramic body, and to form glass accumulations along columnar structures. On the other hand, the glass accumulation formed in the ceramic electronic component according to the example 3 was smaller in thickness as compared with the examples 1 and 2. This is believed to be because the value of $|\Delta B|$ was a relatively small value of 0.02, which means that the wettability of the glass component was low to the ceramic body, thus making the glass component less likely to transfer toward the ceramic body. From a comparison made among the examples 4 to 6, it is determined that the glass accumulation was smaller in thickness as the distance between the internal electrodes was larger. In addition, from a comparison made among the examples 7 to 9, it is determined that the glass accumulation formed along the columnar structure was larger in thickness as the columnar structure was larger in length. In the example 6, the center of the glass accumulation was 2.2 μm or less in thickness, while the area of the part without any plated layer formed was 5% or less with respect to the entire surface area of the external electrode.

Accordingly, it is believed that the glass accumulation was formed enough to suppress deposition of the glass components on the external electrode surfaces in the example 6. Accordingly, the ceramic electronic component according to the example 6 could be put into practical use, and was thus determined to be "pass (Δ)" in the comprehensive evaluation.

In the ceramic electronic components according to the examples 1, 2, 4, 5, and 9 to 11, a location without any plated layer formed was not observed at the external electrode surfaces, which exhibited favorable plating properties. This is believed to be because the formation of sufficiently thick glass accumulations between the external electrodes and the ceramic bodies reduced the amounts of the glass components deposited on the surfaces of the external electrodes. On the other hand, in the ceramic electronic components according to the examples 3, 6, and 8, locations without any plated layer formed were observed at parts where the external electrodes were relatively small in thickness, such as corners. However, it has been confirmed that uniform plated layers were formed as whole external electrodes. In addition, there was no part where the metal component of the external electrode was exposed to the outside, because of the glass components deposited at the parts of the external electrodes without any plated layer formed. Accordingly, the metal components of the external electrodes can be prevented from being oxidized by the air, and/or from being corroded by water or the like, and reliability is thus considered to have no problem as ceramic electronic components. Furthermore, because the non-plated parts are 5% or less, it is believed that defective mounting can be kept sufficiently from being generated, thereby making it possible to put the ceramic electronic components into practice use. On the other hand, in the ceramic electronic component according to the example 7, a location without any plated layer formed was observed at a corner, and the external electrode was exposed partially.

From the examples 1, 10, and 11 as well as FIG. 6, it is determined that as the temperature for the baking treatment was higher, the columnar structures 6 are longer, and the glass accumulations 51 were larger in thickness.

INDUSTRIAL APPLICABILITY

The ceramic electronic component according to the present invention can keep plated layers from being formed defectively on external electrode surfaces. The present invention can be applied to a wide variety of ceramic electronic components such as laminated ceramic capacitors, laminated LC composite components of inductors in combination with capacitors, laminated varistors, and thermistors.

DESCRIPTION OF REFERENCE SYMBOLS

1: ceramic electronic component
2: ceramic body
21: one end surface of a ceramic body
22: the other end surface of a ceramic body
31: first internal electrode
32: second internal electrode
41: first external electrode
42: second external electrode
5: glass accumulation
51: glass accumulation
52: glass layer
53: thickness of a glass accumulation near a columnar structure
54: thickness of a glass accumulation in the center
6: columnar structure
61: length of a columnar structure

Claims

1.   A ceramic electronic component (1) comprising:

a ceramic body (2);
a first internal electrode (31) provided in the ceramic body, and exposed at one end surface (21) of the ceramic body;
a second internal electrode (32) provided in the ceramic body, and exposed at the other end surface (22) of the ceramic body;
a first external electrode (41) provided on the one end surface of the ceramic body and electrically connected to the first internal electrode; and
a second external electrode (42) provided on the other end surface of the ceramic body and electrically connected to the second internal electrode,
wherein
the ceramic electronic component comprises, between the external electrode and the internal electrode, a columnar structure (6) that provides electrical conduction at least between the external electrode and the internal electrode,
the ceramic electronic component comprises, on both sides of the columnar structure, a glass accumulation (5) formed in contact with the columnar structure, **characterized in that**
a difference between a basicity of the ceramic body and a basicity of a glass component included in the glass accumulation has an absolute value of 0.02 or more, wherein the basicity of the ceramic body and the basicity of the glass component are calculated by a method disclosed in the paragraphs [0031]-[0039] of the description.

2. The ceramic electronic component according to claim 1, wherein the columnar structure (6) is greater than 5 $\mu$m in length.

3. The ceramic electronic component according to claim 2, wherein the columnar structure (6) is greater than 5 $\mu$m and 20 $\mu$m or less in length.

4. The ceramic electronic component according to any one of claims 1 to 3, wherein the glass accumulation (5) near the columnar structure (6) is larger in thickness than in a location away from the columnar structure.

5. The ceramic electronic component according to any one of claims 1 to 4, comprising a plurality of the first internal electrodes (31) and a plurality of the second internal electrodes (32), wherein in a region sandwiched by the columnar structures (6) adjacent to each other, a glass accumulation (5) in contact with one of the columnar structures (6) and a glass accumulation (5) in contact with the other columnar structure (6) are connected together, and thus formed in an integrated manner, and the glass accumulations formed in an integrated manner are larger in thickness near the columnar structures than in a center of the accumulations.

6. The ceramic electronic component according to claim 5, wherein a distance between internal electrodes (31, 32) adjacent to each other is 107 $\mu$m or less at the end surface of the ceramic body (41, 42).

7. The ceramic electronic component according to claim 6, wherein the distance between internal electrodes (31, 32) adjacent to each other is 58 $\mu$m to 77 $\mu$m at the end surface of the ceramic body (41, 42).

8. The ceramic electronic component according to any one of claims 5 to 7, wherein the glass accumulations (51) in the center are larger than 2.2 $\mu$m in thickness.

9. The ceramic electronic component according to claim 8, wherein the glass accumulations (51) in the center are larger than 2.2 $\mu$m and 10 $\mu$m or less in thickness.

10. The ceramic electronic component according to any one of claims 1 to 9, wherein, in a baking treatment, a diffusion rate in diffusion of a metal component included in the external electrode into the internal electrode is higher than a diffusion rate in diffusion of a metal component included in the internal electrode into the external electrode.

11. The ceramic electronic component according to any one of claims 1 to 10, wherein the metal component included in the external electrode comprises Cu, whereas the metal component included in the internal electrode comprises at least Pd.

12. The ceramic electronic component according to claim 11, wherein in the internal electrode, a Pd content is 10 weight% or more, based on a total weight of the metal component included in the internal electrode.

13. The ceramic electronic component according to claim 12, wherein in the internal electrode, the Pd content is 40 weight% or more, based on the total weight of the metal component included in the internal electrode.

14. The ceramic electronic component according to any one of claims 11 to 13, wherein the metal component included in the internal electrode further comprises Ag.

15. The ceramic electronic component according to claim 1, wherein the difference between the basicity of the ceramic body and the basicity of the glass component included in the glass accumulation has an absolute value of 0.06 to 0.19.

16. A method for manufacturing a ceramic electronic component (1), the method comprising the steps of:

forming an unfired internal electrode by applying an internal electrode paste comprising conductive particles onto one principal surface of a ceramic green sheet;
forming a stacked body with unfired first and second internal electrodes (31, 32) disposed therein by stacking multiple ceramic green sheets with unfired internal electrodes formed;

obtaining a ceramic body (2) with first and second internal electrodes (31, 32) disposed therein by firing the stacked body;

forming unfired first and second external electrodes (41, 42) by applying an external electrode paste including conductive particles and a glass material onto both end surfaces of the ceramic body; and

forming external electrodes by applying a baking treatment to the unfired first and second external electrodes, wherein

a diffusion rate in diffusion of a metal component included in the external electrode into the internal electrode is higher than a diffusion rate in diffusion of a metal component included in the internal electrode into the external electrode in the baking treatment, **characterized in that**

a difference between a basicity of a ceramic material included in the ceramic green sheet and a basicity of the glass material included in the external electrode paste has an absolute value of 0.02 or more, wherein the basicity of the ceramic body and the basicity of the glass material are calculated by a method disclosed in the paragraphs [0031]-[0039] of the description.

17. The method according to claim 16, wherein the conductive particles included in the internal electrode paste comprise at least Pd, whereas the conductive particles included in the external electrode paste comprise at least one of Cu, $Cu_2O$, and CuO.

18. The method according to one of claims 16 and 17, wherein a distance between unfired internal electrodes adjacent to each other is 214 $\mu$m or less at an end surface of the stacked body.

19. The method according to any one of claims 16 to 18, wherein the baking treatment is carried out at a temperature of 800°C to 900°C.

**Patentansprüche**

1. Eine keramische Elektronikkomponente (1), die folgende Merkmale aufweist:

einen Keramikkörper (2);

eine erste Innenelektrode (31), die in dem Keramikkörper vorgesehen ist und an einer Endoberfläche (21) des Keramikkörpers freiliegt;

eine zweite Innenelektrode (32), die in dem Keramikkörper vorgesehen ist und an der anderen Endoberfläche (22) des Keramikkörpers freiliegt;

eine erste Außenelektrode (41), die auf der anderen Endoberfläche des Keramikkörpers vorgesehen ist und mit der ersten Innenelektrode elektrisch verbunden ist; und

eine zweite Außenelektrode (42), die auf der anderen Endoberfläche des Keramikkörpers vorgesehen ist und mit der zweiten Innenelektrode elektrisch verbunden ist,

wobei

die keramische Elektronikkomponente zwischen der Außenelektrode und der Innenelektrode eine Säulenstruktur (6) aufweist, die eine elektrische Leitung zumindest zwischen der Außenelektrode und der Innenelektrode bereitstellt,

die keramische Elektronikkomponente auf beiden Seiten der Säulenstruktur eine in Kontakt mit der Säulenstruktur gebildete Glasansammlung (5) aufweist,

**dadurch gekennzeichnet, dass**

ein Unterschied zwischen einer Basizität des Keramikkörpers und einer Basizität einer in der Glasansammlung beinhalteten Glaskomponente einen absoluten Wert von 0,02 oder mehr aufweist, wobei die Basizität des Keramikkörpers und die Basizität der Glaskomponente mittels eines Verfahrens berechnet werden, das in den Absätzen [0031]-[0039] der Beschreibung offenbart ist.

2. Die keramische Elektronikkomponente gemäß Anspruch 1, bei der die Säulenstruktur (6) eine Länge von mehr als 5 $\mu$m aufweist.

3. Die keramische Elektronikkomponente gemäß Anspruch 2, bei der die Säulenstruktur (6) eine Länge von mehr als 5 $\mu$m und von 20 $\mu$m oder weniger aufweist.

4. Die keramische Elektronikkomponente gemäß einem der Ansprüche 1 bis 3, wobei die Glasansammlung (5) in der Nähe der Säulenstruktur (6) eine größere Dicke aufweist als an einem von der Säulenstruktur entfernten Ort.

5. Die keramische Elektronikkomponente gemäß einem der Ansprüche 1 bis 4, die eine Mehrzahl der ersten Innenelektroden (31) und eine Mehrzahl der zweiten Innenelektroden (32) aufweist, wobei in einer Region, die zwischen den zueinander benachbarten Säulenstrukturen (6) angeordnet ist, eine Glasansammlung (5), die mit einer der Säulenstrukturen (6) in Kontakt ist, und eine Glasansammlung (5), die mit der anderen Säulenstruktur (6) in Kontakt ist, miteinander verbunden und somit auf integrierte Weise gebildet sind und die auf integrierte Weise gebildeten Glasansammlungen in der Nähe der Säulenstrukturen eine größere Dicke aufweisen als in einer Mitte der Ansammlungen.

6. Die keramische Elektronikkomponente gemäß Anspruch 5, bei der ein Abstand zwischen zueinander benachbarten Innenelektroden (31, 32) an der Endoberfläche des Keramikkörpers (41, 42) 107 $\mu$m oder weniger beträgt.

7. Die keramische Elektronikkomponente gemäß Anspruch 6, bei der der Abstand zwischen zueinander benachbarten Innenelektroden (31, 32) an der Endoberfläche des Keramikkörpers (41, 42) zwischen 58 $\mu$m und 77 $\mu$m beträgt.

8. Die keramische Elektronikkomponente gemäß einem der Ansprüche 5 bis 7, bei der die Glasansammlungen (51) in der Mitte eine Dicke von mehr als 2,2 $\mu$m aufweisen.

9. Die keramische Elektronikkomponente gemäß Anspruch 8, bei der die Glasansammlungen (51) in der Mitte eine Dicke von mehr als 2,2 $\mu$m und von 10 $\mu$m oder weniger aufweisen.

10. Die keramische Elektronikkomponente gemäß einem der Ansprüche 1 bis 9, bei der während einer Wärmebehandlung eine Diffusionsrate der Diffusion einer in der Außenelektrode enthaltenen Metallkomponente in die Innenelektrode höher ist als eine Diffusionsrate der Diffusion einer in der Innenelektrode enthaltenen Metallkomponente in die Außenelektrode.

11. Die keramische Elektronikkomponente gemäß einem der Ansprüche 1 bis 10, bei der die in der Außenelektrode enthaltene Metallkomponente Cu aufweist, während die in der Innenelektrode enthaltene Metallkomponente zumindest Pd aufweist.

12. Die keramische Elektronikkomponente gemäß Anspruch 11, bei der ein Pd-Gehalt in der Innenelektrode 10 Gew.-% oder mehr beträgt, basierend auf einem Gesamtgewicht der in der Innenelektrode enthaltenen Metallkomponente.

13. Die keramische Elektronikkomponente gemäß Anspruch 12, wobei der Pd-Gehalt in der Innenelektrode 40 Gew.-% oder mehr beträgt, basierend auf dem Gesamtgewicht der in der Innenelektrode enthaltenen Metallkomponente.

14. Die keramische Elektronikkomponente gemäß einem der Ansprüche 11 bis 13, bei der die in der Innenelektrode enthaltene Metallkomponente ferner Ag aufweist.

15. Die keramische Elektronikkomponente gemäß Anspruch 1, bei der der Unterschied zwischen der Basizität des Keramikkörpers und der Basizität der in der Glasansammlung enthaltenen Glaskomponente einen absoluten Wert von 0,06 bis 0,19 aufweist.

16. Ein Verfahren zum Herstellen einer keramischen Elektronikkomponente (1), wobei das Verfahren die folgenden Schritte aufweist:

Bilden einer ungebrannten Innenelektrode durch Aufbringen einer Innenelektrodenpaste, die leitfähige Partikel aufweist, auf eine Hauptoberfläche einer Keramikgrünschicht;
Bilden eines gestapelten Körpers mit darin angeordneten ungebrannten ersten und zweiten Innenelektroden (31, 32) durch Stapeln mehrerer Keramikgrünschichten mit gebildeten ungebrannten Innenelektroden;
Erhalten eines Keramikkörpers (2) mit darin angeordneten ersten und zweiten Innenelektroden (31, 32) durch Brennen des gestapelten Körpers;
Bilden von ungebrannten ersten und zweiten Außenelektroden (41, 42) durch Aufbringen einer Außenelektrodenpaste, die leitfähige Partikel umfasst, und eines Glasmaterials auf beide Endoberflächen des Keramikkörpers; und
Bilden von Außenelektroden durch Anwenden einer Wärmebehandlung auf die ungebrannten ersten und zweiten Außenelektroden,

wobei

während der Wärmebehandlung eine Diffusionsrate der Diffusion einer in der Außenelektrode enthaltenen Metallkomponente in die Innenelektrode höher ist als eine Diffusionsrate einer in der Innenelektrode enthaltenen Metallkomponente in die Außenelektrode,

**dadurch gekennzeichnet, dass**

ein Unterschied zwischen einer Basizität eines Keramikmaterials, das in der Keramikgrünschicht enthalten ist, und einer Basizität des Glasmaterials, das in der Außenelektrodenpaste enthalten ist, einen absoluten Wert von 0,02 oder mehr aufweist, wobei die Basizität des Keramikkörpers und die Basizität des Glasmaterials durch ein Verfahren berechnet werden, das in den Absätzen [0031]-[0039] der Beschreibung offenbart ist.

**17.** Das Verfahren gemäß Anspruch 16, bei dem die in der Innenelektrodenpaste enthaltenen leitfähigen Partikel zumindest Pd aufweisen, während die in der Außenelektrodenpaste enthaltenen leitfähigen Partikel zumindest eines von Cu, $Cu_2O$ und CuO aufweisen.

**18.** Das Verfahren gemäß einem der Ansprüche 16 und 17, bei dem ein Abstand zwischen zueinander benachbarten ungebrannten Innenelektroden an einer Endoberfläche des gestapelten Körpers 214 $\mu$m oder weniger beträgt.

**19.** Das Verfahren gemäß einem der Ansprüche 16 bis 18, bei dem die Wärmebehandlung bei einer Temperatur von 800 °C bis 900 °C ausgeführt wird.

## Revendications

**1.** Constituant électronique céramique (1) comprenant :

un corps céramique (2) ;
une première électrode interne (31) fournie dans le corps céramique, et exposée à une surface d'extrémité (21) du corps céramique ;
une seconde électrode interne (32) fournie dans le corps céramique, et exposée sur l'autre surface d'extrémité (22) du corps céramique ;
une première électrode externe (41) fournie sur l'une surface d'extrémité du corps céramique et électriquement connectée à la première électrode interne ; et
une seconde électrode externe (42) fournie sur l'autre surface d'extrémité du corps céramique et électriquement connectée à la seconde électrode interne,
dans lequel
le constituant électronique céramique comprend, entre l'électrode externe et l'électrode interne, une structure colonnaire (6) qui fournit une conduction électrique au moins entre l'électrode externe et l'électrode interne, le constituant électronique céramique comprend, sur les deux côtés de la structure colonnaire, une accumulation de verre (5) formée en contact avec la structure colonnaire, **caractérisé en ce que**
une différence entre une basicité du corps céramique et une basicité d'un constituant de verre inclus dans l'accumulation de verre présente une valeur absolue de 0,02 ou supérieure, dans lequel la basicité du corps céramique et la basicité du constituant de verre sont calculées par un procédé décrit dans les paragraphes [0031]-[0039] de la description.

**2.** Constituant électronique céramique selon la revendication 1, dans lequel la structure colonnaire (6) est supérieure à 5 $\mu$m en longueur.

**3.** Constituant électronique céramique selon la revendication 2, dans lequel la structure colonnaire (6) est supérieure à 5 $\mu$m et de 20 $\mu$m ou inférieure en longueur.

**4.** Constituant électronique céramique selon l'une quelconque des revendications 1 à 3, dans lequel l'accumulation de verre (5) à proximité de la structure colonnaire (6) est plus large en épaisseur qu'à un endroit éloigné de la structure colonnaire.

**5.** Constituant électronique céramique selon l'une quelconque des revendications 1 à 4, comprenant plusieurs premières électrodes internes (31) et plusieurs secondes électrodes internes (32), dans lequel dans une région prise en sandwich par les structures colonnaires (6) adjacentes les unes aux autres, une accumulation de verre (5) en contact avec une des structures colonnaires (6) et une accumulation de verre (5) en contact avec l'autre structure colonnaire (6) sont connectées ensemble, et ainsi formées de façon intégrée, les accumulations de verre formées de façon intégrée sont plus larges en épaisseur à proximité des structures colonnaires qu'au centre des accumulations.

6. Constituant électronique céramique selon la revendication 5, dans lequel une distance entre des électrodes internes (31, 32) adjacentes les unes aux autres est de 107 μm ou inférieure à la surface d'extrémité du corps céramique (41, 42).

7. Constituant électronique céramique selon la revendication 6, dans lequel la distance entre des électrodes internes (31, 32) adjacentes les unes aux autres est de 58 μm à 77 μm sur la surface d'extrémité du corps céramique (41, 42).

8. Constituant électronique céramique selon l'une quelconque des revendications 5 à 7, dans lequel les accumulations de verre (51) dans le centre sont plus larges que 2,2 μm en épaisseur.

9. Constituant électronique céramique selon la revendication 8, dans lequel les accumulations de verre (51) au centre sont plus larges que 2,2 μm et de 10 μm ou inférieures en épaisseur.

10. Constituant électronique céramique selon l'une quelconque des revendications 1 à 9, dans lequel, dans un traitement de cuisson, une vitesse de diffusion dans la diffusion d'un constituant de métal inclus dans l'électrode externe dans l'électrode interne est supérieure à une vitesse de diffusion dans le corps dans la diffusion d'un constituant de métal inclus dans l'électrode interne dans l'électrode externe.

11. Constituant électronique céramique selon l'une quelconque des revendications 1 à 10, dans lequel le constituant de métal inclus dans l'électrode externe comprend Cu, alors que le constituant de métal inclus dans l'électrode interne comprend au moins Pd.

12. Constituant électronique céramique selon la revendication 11, dans lequel dans l'électrode interne, une teneur en Pd est de 10 % en masse ou supérieure, sur la base d'une masse totale du constituant de métal inclus dans l'électrode interne.

13. Constituant électronique céramique selon la revendication 12, dans lequel dans l'électrode interne, la teneur en Pd est de 40 % en masse ou supérieure, sur la base de la masse totale du constituant de métal inclus dans l'électrode interne.

14. Constituant électronique céramique selon l'une quelconque des revendications 11 à 13, dans lequel le constituant de métal inclus dans l'électrode interne comprend de plus Ag.

15. Constituant électronique céramique selon la revendication 1, dans lequel la différence entre la basicité du corps céramique et la basicité du constituant de verre inclus dans l'accumulation de verre présente une valeur absolue de 0,06 à 0,19.

16. Procédé pour la fabrication d'un constituant électronique céramique (1), le procédé comprenant les étapes de :

formation d'une électrode interne non-cuite par application d'une pâte d'électrode interne comprenant des particules conductrices sur au moins une surface principale d'une feuille céramique à l'état vert ;
formation d'un corps empilé avec de première et seconde électrodes internes non-cuites (31, 32) disposées dans celui-ci par empilement de multiples feuilles céramiques à l'état vert avec des électrodes internes non-cuites formées ;
obtention d'un corps céramique (2) avec des première et seconde électrodes internes (31, 32) disposées dans celui-ci par cuisson du corps empilé ;
formation de première et seconde électrodes externes non-cuites (41, 42) par application d'une pâte d'électrode externe incluant des particules conductrices et d'un matériau de verre sur les deux surfaces d'extrémité du corps céramique ; et
formation d'électrodes externes par application d'un traitement de cuisson aux première et seconde électrodes externes non cuites,
dans lequel
une vitesse de diffusion dans la diffusion d'un constituant de métal inclus dans l'électrode externe dans l'électrode interne est supérieure à une vitesse de diffusion dans la diffusion d'un constituant de métal inclus dans l'électrode interne dans l'électrode externe dans le traitement de cuisson,

**caractérisé en ce que**

une différence entre une basicité d'un matériau céramique inclus dans la feuille céramique à l'état vert et une basicité du matériau de verre inclus dans la pâte d'électrode externe présente une valeur absolue de 0,02 ou supérieure, dans lequel la basicité du corps céramique et la basicité du matériau de verre sont calculées par un procédé décrit dans les paragraphes [0031]-[0039] de la description.

17. Procédé selon la revendication 16, dans lequel les particules conductrices incluses dans la pâte d'électrode interne comprennent au moins Pd, alors que les particules conductrices incluses dans la pâte d'électrode externe comprennent au moins un de Cu, $Cu_2O$ et CuO.

18. Procédé selon l'une quelconque des revendications 16 et 17, dans lequel une distance entre des électrodes internes non-cuites adjacentes les unes aux autres est de 214 $\mu$m ou inférieure sur une surface d'extrémité du corps empilé.

19. Procédé selon l'une quelconque des revendications 16 à 18, dans lequel le traitement de cuisson est réalisé à une température de 800°C à 900°C.

FIG. 1

FIG. 2

FIG. 3

FIG. 4

FIG. 5

(a)

(b)

(c)

FIG. 6

(a)

(b)

(c)

FIG. 7

(a)

(b)

(c)

FIG. 8

(a)　　　　　　　　　　(b)　　　　　　　　　　(c)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H097879 B
- JP H09283365 A